(19)

Europäisches
Patentamt
European
Patent Office
Office européen
des brevets

(11)     **EP 4 691 997 A1**

(12)     **EUROPEAN PATENT APPLICATION**
published in accordance with Art. 153(4) EPC

(43) Date of publication:
**11.02.2026  Bulletin 2026/07**

(21) Application number: **24795750.9**

(22) Date of filing: **28.03.2024**

(51) International Patent Classification (IPC):
*C01G 53/00* (2025.01)     *C01G 51/00* (2025.01)
*H01M 4/505* (2010.01)     *H01M 4/525* (2010.01)
*H01M 4/485* (2010.01)     *H01M 10/0525* (2010.01)

(52) Cooperative Patent Classification (CPC):
**H01M 4/131; H01M 4/505; H01M 4/525;**
**H01M 10/0525;** H01M 2004/021; H01M 2004/028;
Y02E 60/10

(86) International application number:
**PCT/CN2024/084405**

(87) International publication number:
**WO 2024/222369 (31.10.2024 Gazette 2024/44)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **27.04.2023   CN 202310473126**

(71) Applicant: **Contemporary Amperex Technology**
**Co., Limited**
**Ningde, Fujian 352100 (CN)**

(72) Inventors:
• **YUN, Liang**
  **Ningde, Fujian 352100 (CN)**

• **SUN, Xin**
  **Ningde, Fujian 352100 (CN)**
• **LI, Xuan**
  **Ningde, Fujian 352100 (CN)**
• **WU, Lili**
  **Ningde, Fujian 352100 (CN)**
• **SONG, Peidong**
  **Ningde, Fujian 352100 (CN)**
• **DONG, Miaomiao**
  **Ningde, Fujian 352100 (CN)**

(74) Representative: **Kraus & Lederer PartGmbB**
**Thomas-Wimmer-Ring 15**
**80539 München (DE)**

(54)     **POSITIVE ELECTRODE ACTIVE MATERIAL, POSITIVE ELECTRODE SHEET, SECONDARY BATTERY AND ELECTRIC DEVICE**

(57)     Provided in the present application are a positive electrode active material, a positive electrode sheet, a secondary battery, and an electric device. The positive electrode active material is present in a form of secondary particles formed through aggregation of primary particles. At least some of the secondary particles have pores. A particle size distribution diagram of the positive electrode active material that is measured by using a laser diffraction method is of a bimodal shape. A difference between a peak position of a second peak and a peak position of a first peak is 1 μm to 13 μm. Therefore, a battery has excellent power performance and mechanical strength.

FIG. 1

Processed by Luminess, 75001 PARIS (FR)

EP 4 691 997 A1

**Description**

CROSS REFERENCE

The present application makes reference to Chinese Patent Application No. 202310473126.X filed on April 27, 2023 and entitled "Positive Electrode Active Material, Positive Electrode Sheet, Secondary Battery, and Electric Device", which is incorporated herein by reference in its entirety.

TECHNICAL FIELD

The present application relates to the field of secondary battery technologies, and in particular, to a positive electrode active material, a positive electrode sheet, a secondary battery, and an electric device.

BACKGROUND

Recently, a secondary battery is widely applied in an energy storage power system, such as a hydraulic, thermal, wind, or solar power plant, and the like, and the fields of a power tool, an electric bicycle, an electric motorcycle, an electric vehicle, military equipment, aerospace, and the like.

The performance of a positive electrode active material directly affects the performance of the secondary battery. Currently, the positive electrode active material has many defects. Consequently, application needs of a new-generation electrochemical system cannot be met.

SUMMARY

The present application is performed in view of the above problems, and an objective thereof is to provide a positive electrode active material. At least some of secondary particles in the positive electrode active material have pores. A particle size distribution diagram of the positive electrode active material is of a bimodal shape. Therefore, the power performance and the mechanical strength of a battery may be taken into account.

According to a first aspect of the present application, a positive electrode active material is provided. The positive electrode active material is present in a form of secondary particles formed through aggregation of primary particles. At least some of the secondary particles have pores.

A particle size distribution diagram of the positive electrode active material that is measured by using a laser diffraction method is of a bimodal shape. A difference between a peak position of a second peak and a peak position of a first peak is 1 $\mu$m to 13 $\mu$m.

On the one hand, the pores facilitate the positive electrode active material to have three-dimensional channels, thereby shortening a solid-phase mass transfer path of lithium ions, and improving the power performance and the energy density of a battery. On the other hand, the particle size distribution diagram of the positive electrode active material is of the bimodal shape, that is, matching between positive electrode active materials having different particle sizes facilitates improvement of the tap densities of the positive electrode active materials, and more importantly, the positive electrode active materials having different particle sizes may support each other, thereby facilitating improvement of the mechanical strength thereof, reducing the risk of the positive electrode active material being broken during use, improving the shear strength of a positive electrode sheet, and improving the mechanical strength of the battery. In addition, a difference between a peak position of a first peak and a peak position of a second peak in the particle size distribution diagram of the positive electrode active material is controlled to be 1 $\mu$m to 13 $\mu$m, which further facilitates improvement of the compacted density of the positive electrode sheet and the electrical performance of the battery.

In any implementation, the peak position of the first peak is located within 1 $\mu$m to 5 $\mu$m, optionally, 1.5 $\mu$m to 4.5 $\mu$m; and/or

the peak position of the second peak is located within 6 $\mu$m to 14 $\mu$m, optionally, 8 $\mu$m to 12 $\mu$m.

The peak position of the first peak and the peak position of the second peak are controlled to be within appropriate ranges, so that the battery has a high volumetric energy density and excellent power performance and mechanical strength.

In any implementation, each of the secondary particles comprises a plurality of pores formed by using spaces between the primary particles, and the inner diameter of the pores is 0.1 $\mu$m to 0.6 $\mu$m, optionally, 0.2 $\mu$m to 0.4 $\mu$m; or each of the secondary particles comprises a single hollow pore at a central position that is enclosed by the primary particles, and the inner diameter of the pore is 0.5 $\mu$m to 3 $\mu$m, optionally, 0.8 $\mu$m to 1.2 $\mu$m.

The pores having different distribution forms have different inner diameters, which facilitates the positive electrode active material to form the three-dimensional channels, thereby shortening the solid-phase mass transfer path of lithium ions, and improving the power performance of the battery.

In any implementation, the positive electrode active material has a chemical formula as follows:

$$Li_aNi_xM1_yM2_{1-x-y}O_2;$$

and
each of M1 and M2 comprises one or a plurality of Co, Mn, Al, B, Zr, Sr, Y, Sb, W, Ti, Mg, or Nb, and $0.8 \leq a \leq 1.2$, $0.55 \leq x \leq 1.0$, and $0 \leq y \leq 0.45$, optionally, $0.8 \leq a \leq 1.2$, $0.95 \leq x \leq 0.995$, and $0 \leq y \leq 0.05$.

The use of the above materials can ensure that the positive electrode active material has a high gram volume, so that the battery has a high energy density.

In any implementation, the average particle size D of the primary particles of the positive electrode active material is 0.1 $\mu$m to 0.8 $\mu$m, optionally, 0.2 $\mu$m to 0.5 $\mu$m.

The average particle size of the primary particles of the positive electrode active material is controlled to be within an appropriate range, so that the secondary particles of the positive electrode active material that have an appropriate range can be formed, thereby enabling the battery thereof to have a high volumetric energy density and excellent power performance and mechanical strength.

In any implementation, Dv50 of the secondary particles of the positive electrode active material is 9 $\mu$m to 15 $\mu$m, optionally, 10 $\mu$m to 12 $\mu$m.

Dv50 of the positive electrode active material is controlled to have an appropriate range, so that the battery thereof has a high volumetric energy density and excellent power performance and mechanical strength.

In any implementation, the specific surface area of the positive electrode active material is 0.1 m²/g to 1.0 m²/g, optionally, 0.2 m²/g to 0.5 m²/g.

The specific surface area of the positive electrode active material is controlled to be within an appropriate range, so that the battery thereof has a high volumetric energy density and excellent power performance and mechanical strength.

In any implementation, the positive electrode active material comprises a first positive electrode material and a second positive electrode material.

When the first positive electrode material and the second positive electrode material are used in combination, there is a synergistic effect between the two materials, which facilitates improvement of the compacted density of the positive electrode sheet and improvement of the mechanical performance and the cycle performance of the battery thereof.

In any implementation, the first positive electrode material has the pore and the second positive electrode material is of a solid structure; or

the first positive electrode material is of a solid structure and the second positive electrode material has the pore; or

each of the first positive electrode material and the second positive electrode material has the pore.

The pores can shorten the solid-phase mass transfer path of lithium ions, improve the power performance of the battery, and expose more (010) crystal planes, thereby generating more reaction active sites, and improving the gram volumes and the energy densities of the materials.

In any implementation, the mass ratio A of the first positive electrode material to the second positive electrode material and the porosity B of the positive electrode active material meet $0 \leq |B-A \times 0.4-(1-A) \times 0.2| \leq 1$.

The mass ratio of the first positive electrode material to the second positive electrode material and the porosity of the positive electrode active material are controlled to meet the above relationship, to provide sufficient pores to shorten the solid-phase mass transfer path of lithium ions, thereby improving the power performance of the battery, adjusting the interaction force between the first positive electrode material and the second positive electrode material, and improving the mechanical performance of the battery thereof.

In any implementation, the mass ratio A of the first positive electrode material to the second positive electrode material is 1.5 to 9, optionally, 2 to 8.

The mass ratio of the first positive electrode material to the second positive electrode material is controlled to be within an appropriate range, to take into account both the compacted density of the positive electrode sheet and the mechanical strength of the battery thereof.

In any implementation, the porosity B of the positive electrode active material is 0.15% to 0.45%, optionally, 0.25% to 0.35%.

The porosity of the positive electrode active material is controlled to be within an appropriate range, to provide sufficient pores to shorten the solid-phase mass transfer path of lithium ions, thereby improving the power performance of the battery, and avoiding or reducing an impact of the pores on the mechanical strength of the positive electrode active material.

In any implementation, each of the first positive electrode material and the second positive electrode material independently has a chemical formula as follows:

$$Li_aNi_xM1_yM2_{1-x-y}O_2;$$

and

each of M1 and M2 comprises one or a plurality of Co, Mn, Al, B, Zr, Sr, Y, Sb, W, Ti, Mg, or Nb, and $0.8 \leq a \leq 1.2$, $0.55 \leq x \leq 1.0$, and $0 \leq y \leq 0.45$, optionally, $0.8 \leq a \leq 1.2$, $0.95 \leq x \leq 0.995$, and $0 \leq y \leq 0.05$.

Both the first positive electrode material and the second positive electrode material having the above chemical formula can ensure that the positive electrode active material has a high gram volume, so that the battery has a high energy density.

In any implementation, Dv50 of the first positive electrode material is 8 $\mu$m to 18 $\mu$m, optionally, 10 $\mu$m to 12 $\mu$m.

In any implementation, Dv50 of the second positive electrode material is 0.8 $\mu$m to 5 $\mu$m, optionally, 1 $\mu$m to 3 $\mu$m.

Dv50 of the first positive electrode material and Dv50 of the second positive electrode material are controlled to be within appropriate ranges, to facilitate the synergistic effect between the first positive electrode material and the second positive electrode material, thereby facilitating improvement of the volumetric energy density and the mechanical performance of the battery thereof.

In any implementation, a ratio of a difference between Dv90 and Dv50 of the first positive electrode material to Dv50 of the first positive electrode material meets 0.6 to 1.2, optionally, 0.8 to 1.0; and/or

a ratio of a difference between Dv50 and Dv10 of the first positive electrode material to Dv10 of the first positive electrode material meets 1.2 to 2.5, optionally, 1.5 to 2.0.

In any implementation, a ratio of a difference between Dv90 and Dv50 of the second positive electrode material to Dv50 of the second positive electrode material meets 0.8 to 1.5, optionally, 1.0 to 1.3; and/or

a ratio of a difference between Dv50 and Dv10 of the second positive electrode material to Dv10 of the second positive electrode material meets 6 to 12, optionally, 8 to 10.

A particle size distribution of the first positive electrode material and a particle size distribution of the second positive electrode material are controlled to be within appropriate ranges, to facilitate the synergistic effect between the first positive electrode material and the second positive electrode material, thereby improving the mechanical performance of the battery, and improving the compacted density of the positive electrode sheet.

According to a second aspect of the present application, a positive electrode sheet is provided. The positive electrode sheet comprises a positive electrode current collector and a positive electrode film layer disposed on at least one surface of the positive electrode current collector. The positive electrode film layer comprises the positive electrode active material according to the first aspect of the present application.

In any implementation, the thickness of the positive electrode film layer is 200 $\mu$m to 400 $\mu$m, optionally, 220 $\mu$m to 300 $\mu$m.

The thickness of the positive electrode film layer is controlled to be within an appropriate range, to provide sufficient positive electrode active materials, thereby improving the energy density of a battery, and reducing an impact on solid-phase mass transfer of lithium ions. The energy density and the power performance of the battery are taken into account.

In any implementation, the compacted density of the positive electrode film layer is 2.9 $g/m^2$ to 3.5 $g/m^2$.

The compacted density of the positive electrode film layer being 2.9 $g/m^2$ to 3.5 $g/m^2$ facilitates improvement of the energy density of the battery.

According to a third aspect of the present application, a secondary battery is provided, comprising the positive electrode sheet according to the second aspect.

According to a fourth aspect of the present application, an electric device is provided, comprising the secondary battery according to the third aspect.

DESCRIPTION OF DRAWINGS

FIG. 1 is a particle size distribution diagram of a positive electrode active material according to an implementation of the present application;

FIG. 2 is a schematic diagram of a secondary battery according to an implementation of the present application;

FIG. 3 is an exploded view of the secondary battery according to an implementation of the present application shown in FIG. 2;

FIG. 4 is a schematic diagram of a battery module according to an implementation of this application;

FIG. 5 is a schematic diagram of a battery pack according to an implementation of this application;

FIG. 6 is an exploded view of the battery pack according to an implementation of the present application shown in FIG. 5; and

FIG. 7 is a schematic diagram of an electric device using a secondary battery as a power supply according to an implementation of the present application.

DESCRIPTION OF REFERENCE SIGNS:

1-battery pack; 2-upper case; 3-lower case; 4-battery module; 5-secondary battery; 51-housing; 52-electrode assembly; and 53-cover plate.

DESCRIPTION OF EMBODIMENTS

Specific embodiments of a positive electrode active material, a positive electrode sheet, a secondary battery, and an electric device in the present application will be described below in detail with appropriate reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit subject matters described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer $\geq 2$, it is equivalent to disclosing that the parameter is an integer such as 2, 3, 4, 5, 6, 7, 8, 9, 10, 11, or 12.

Unless otherwise specified, all embodiments and optional embodiments of this application may be combined with each other to form new technical solutions.

Unless otherwise specified, all technical features and optional technical features of this application can be combined with each other to form new technical solutions.

Unless otherwise specified, all steps in this application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Unless otherwise specified, the terms "including" and "containing" as used herein are meant to be open or closed. For example, the "including" and "containing" may mean that other components not listed may be further included or contained, or only the listed components may be included or contained.

In this application, the term "or" is inclusive, unless specifically stated otherwise. For example, the phrase "A or B" means "A, B, or both A and B". More specifically, the condition "A or B" is satisfied by either A being true (or present) and B being false (or absent), A being false (or absent) and B being true (or present), or both A and B being true (or present).

Currently, a ternary material in the field of lithium batteries is one of positive electrode active materials of secondary batteries that are hot due to a high theoretical specific capacity, a high discharge plateau, and low costs thereof. A commonly used ternary material limits solid-phase mass transfer of metal ions due to a solid structure thereof. The power performance of a battery can be improved by preparing a ternary material having a pore structure to shorten a solid-phase mass transfer path of metal ions, but the ternary material having a pore structure may have a risk of breakage during use, affecting the electrical performance of the battery. Therefore, there is a need to design a positive electrode active material that can take into account both the power performance and the mechanical strength of a battery, to meet application needs of a new-generation electrochemical system.

[Positive Electrode Active Material]

Based on this, the present application provides a positive electrode active material. The positive electrode active material is present in a form of secondary particles formed through aggregation of primary particles. At least some of the secondary particles have pores. A particle size distribution diagram of the positive electrode active material that is measured by using a laser diffraction method is of a bimodal shape. A difference between a peak position of a second peak and a peak position of a first peak is 1 $\mu$m to 13 $\mu$m.

Herein, the term "primary particles" refers to particles before the positive electrode active material is aggregated.

Herein, the term "pores" refers to cavity structures that are present inside the secondary particles of the positive electrode active material.

It can be understood that the term "the particle size distribution diagram is of a bimodal shape" means that the quantity of particles at the peak position of the first peak and the peak position of the second peak in the particle size distribution diagram is significantly greater than the quantity of particles at another peak position in the particle size distribution diagram, that is, there are a considerable quantity of particles of both particle sizes in the positive electrode active material.

In some implementations, some of the secondary particles have pores.

In some implementations, all of the secondary particles have pores.

In some implementations, the inner diameter of the pores is optionally 0.1 $\mu$m, 0.2 $\mu$m, 0.4 $\mu$m, 0.5 $\mu$m, 0.6 $\mu$m, 0.8 $\mu$m, 1 $\mu$m, 1.2 $\mu$m, 1.4 $\mu$m, 1.5 $\mu$m, 1.6 $\mu$m, 1.8 $\mu$m, 2 $\mu$m, 2.2 $\mu$m, 2.4 $\mu$m, 2.5 $\mu$m, 2.6 $\mu$m, 2.8 $\mu$m, 3 $\mu$m, or a value in a range consisting of any two of the above values.

In some implementations, a difference between the peak position of the second peak and the peak position of the first peak in the particle size distribution diagram is optionally 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, or a value in a range consisting of any two of the above values.

Herein, the particle size distribution diagram was plotted using data measured by using the laser diffraction method. With reference to the GB/T 19077-2016 particle size distribution laser diffraction method, 0.1 g to 0.13 g of positive electrode active material sample to be tested was weighed in a 50 mL beaker, 5 g of anhydrous ethanol was added, a stirring bar of about 2.5 mm was placed, and a wrap film was used for sealing. The sample was sonicated for 5 min and transferred to a magnetic stirrer and stirred at 500 rpm for more than 20 min, and two samples per batch were tested. The particle size distribution diagram based on a volume distribution was measured using a Mastersizer Model 2000E laser particle size analyzer from Malvern Instruments Ltd., UK.

On the one hand, the pores facilitate the positive electrode active material to have three-dimensional channels, thereby shortening a solid-phase mass transfer path of lithium ions, and improving the power performance of a battery. On the other hand, the particle size distribution diagram of the positive electrode active material is of the bimodal shape, that is, matching between positive electrode active materials having different particle sizes facilitates improvement of the tap densities of the positive electrode active materials, and more importantly, the positive electrode active materials having different particle sizes may support each other, thereby facilitating improvement of the mechanical strength thereof, reducing the risk of the positive electrode active material being broken during use, improving the shear strength of a positive electrode sheet, and improving the mechanical strength of the battery. In addition, the difference between the peak position of the first peak and the peak position of the second peak in the particle size distribution diagram of the positive electrode active material is controlled to be 3 $\mu$m to 13 $\mu$m, which further facilitates improvement of the compacted density of the positive electrode sheet and the electrical performance of the battery.

In some implementations, the peak position of the first peak is located within 1 $\mu$m to 5 $\mu$m. In some implementations, the peak position of the first peak is located within 1.5 $\mu$m to 4.5 $\mu$m. In some implementations, the peak position of the first peak is located at 1 $\mu$m, 1.5 $\mu$m, 2 $\mu$m, 2.5 $\mu$m, 3 $\mu$m, 3.5 $\mu$m, 4 $\mu$m, 4.5 $\mu$m, 5 $\mu$m, or a value in a range consisting of any two of the above values.

In some implementations, the peak position of the second peak is located within 6 $\mu$m to 14 $\mu$m. In some implementations, the peak position of the second peak is located within 8 $\mu$m to 12 $\mu$m. In some implementations, the peak position of the second peak is located at 6 $\mu$m, 6.5 $\mu$m, 7 $\mu$m, 7.5 $\mu$m, 8 $\mu$m, 8.5 $\mu$m, 9 $\mu$m, 9.5 $\mu$m, 10 $\mu$m, 10.5 $\mu$m, 11 $\mu$m, 11.5 $\mu$m, 12 $\mu$m, 12.5 $\mu$m, 13 $\mu$m, 13.5 $\mu$m, 14 $\mu$m, or a value in a range consisting of any two of the above values.

The peak position of the first peak and the peak position of the second peak are controlled to be within appropriate ranges, so that the battery has a high volumetric energy density and excellent power performance and mechanical strength.

In some implementations, each of the secondary particles includes a plurality of pores formed by using spaces between the primary particles, and the inner diameter of the pores is 0.1 $\mu$m to 0.6 $\mu$m. In some implementations, each of the secondary particles includes a plurality of pores formed by using spaces between the primary particles, and the inner diameter of the pores is 0.2 $\mu$m to 0.4 $\mu$m. In some implementations, each of the secondary particles includes a plurality of pores formed by using spaces between the primary particles, and the inner diameter of the pores is optionally 0.1 $\mu$m, 0.15 $\mu$m, 0.2 $\mu$m, 0.25 $\mu$m, 0.3 $\mu$m, 0.35 $\mu$m, 0.4 $\mu$m, 0.45 $\mu$m, 0.5 $\mu$m, *0.55* $\mu$m, 0.6 $\mu$m, or a value in a range consisting of any two of the above values.

In some implementations, each of the secondary particles includes a plurality of pores formed by using spaces between the primary particles, the plurality of pores are spaced apart inside the secondary particle, and the plurality of pores are annularly distributed in a cross section through the center of gravity of the secondary particle.

In some implementations, each of the secondary particles alternatively includes pores located inside the primary particles, and the inner diameter of the pores is 0.01 $\mu$m to 0.06 $\mu$m. In some implementations, each of the secondary particles alternatively includes pores located inside the primary particles, and the inner diameter of the pores is optionally 0.01 $\mu$m, 0.02 $\mu$m, 0.03 $\mu$m, 0.04 $\mu$m, 0.05 $\mu$m, 0.06 $\mu$m, or a value in a range consisting of any two of the above values.

In some implementations, each of the secondary particles includes a single hollow pore at a central position that is enclosed by the primary particles, and the inner diameter of the pore is 0.5 $\mu$m to 3 $\mu$m. In some implementations, each of the secondary particles includes a single hollow pore at a central position that is enclosed by the primary particles, and the inner diameter of the pore is 0.8 $\mu$m to 1.2 $\mu$m. In some implementations, each of the secondary particles includes a single hollow pore at a central position that is enclosed by the primary particles, and the inner diameter of the pore is optionally 0.5 $\mu$m, 1 $\mu$m, 1.5 $\mu$m, 2 $\mu$m, 2.5 $\mu$m, 3 $\mu$m, or a value in a range consisting of any two of the above values.

Herein, the term "the inner diameter of the pore" refers to the longest linear distance between any two points on the circumference of a single cavity inside the secondary particle of the positive electrode active material.

Herein, the inner diameter of the pore may be tested by any means known in the art. In an example, a conductive adhesive was adhered to a sample stage, a powdery sample of the positive electrode active material was laid on the conductive adhesive, non-adhered powder was blown off with an ear washing ball, metal spraying was performed, and cross-sectional cutting was performed on particles of the powdery sample by using argon gas plasma. A scanning electron microscope photograph of the powdery sample was obtained by using a scanning electron microscope under conditions of an acceleration voltage of 10 kV and an emission current of 10 mA. The inner diameter size of the pores was measured according to the scanning electron microscope photograph. At least three samples were measured, data of at least 50 pores was measured for each sample, and a number-average value was taken as the inner diameter size of the pores of the sample.

The pores having different distribution forms have different inner diameters, which facilitates the positive electrode active material to form the three-dimensional channels, thereby shortening the solid-phase mass transfer path of lithium ions, and improving the power performance of the battery.

In some implementations, the positive electrode active material has a chemical formula as follows:

$$Li_aNi_xM1_yM2_{1-x-y}O_2;$$

and

each of M1 and M2 includes one or a plurality of Co, Mn, Al, B, Zr, Sr, Y, Sb, W, Ti, Mg, or Nb, and $0.8 \leq a \leq 1.2$, $0.55 \leq x \leq 1.0$, and $0 \leq y \leq 0.45$. In some implementations, $0.8 \leq a \leq 1.2$, $0.95 \leq x \leq 0.995$, and $0 \leq y \leq 0.05$.

The use of the above materials can ensure that the positive electrode active material has a high gram volume, so that the battery has a high energy density.

In some implementations, the average particle size D of the primary particles of the positive electrode active material is 0.1 $\mu$m to 0.8 $\mu$m. In some implementations, the average particle size D of the primary particles of the positive electrode active material is 0.2 $\mu$m to 0.5 $\mu$m. In some implementations, the average particle size D of the primary particles of the positive electrode active material is optionally 0.1 $\mu$m, 0.15 $\mu$m, 0.2 $\mu$m, 0.25 $\mu$m, 0.3 $\mu$m, 0.35 $\mu$m, 0.4 $\mu$m, 0.45 $\mu$m, 0.5 $\mu$m, 0.55 $\mu$m, 0.6 $\mu$m, 0.65 $\mu$m, 0.7 $\mu$m, 0.75 $\mu$m, 0.8 $\mu$m, or a value in a range consisting of any two of the above values.

Herein, the average particle size D of the primary particles of the positive electrode active material may be tested by any means known in the art. In an example, after imaging was performed by using a scanning electron microscope (ZEISS Sigma-02-33, Germany) at a magnification of 500, 200 to 600 primary particles of the positive electrode active material that had a complete shape and were not shielded were randomly selected in an electron microscopic image thereof, the longest diameter of each pore in the primary particles in the microscopic image was recorded, and an average value was taken as the average particle size D.

The average particle size of the primary particles of the positive electrode active material is controlled to be within an appropriate range, so that the secondary particles of the positive electrode active material that have an appropriate range can be formed, thereby enabling the battery thereof to have a high volumetric energy density and excellent power performance and mechanical strength.

In some implementations, Dv50 of the positive electrode active material is 9 $\mu$m to 15 $\mu$m. In some implementations, Dv50 of the positive electrode active material is 10 $\mu$m to 12 $\mu$m. In some implementations, Dv50 of the positive electrode active material is optionally 9 $\mu$m, 9.5 $\mu$m, 10 $\mu$m, 10.5 $\mu$m, 11 $\mu$m, 11.5 $\mu$m, 12 $\mu$m, 12.5 $\mu$m, 13 $\mu$m, 13.5 $\mu$m, 14 $\mu$m, 14.5 $\mu$m, 15 $\mu$m, or a value in a range consisting of any two of the above values.

Herein, Dv50 of the positive electrode active material may be tested using any means known in the art. In an example, with reference to the GB/T 19077-2016 particle size distribution laser diffraction method, 0.1 g to 0.13 g of positive electrode active material sample to be tested was weighed in a 50 mL beaker, 5 g of anhydrous ethanol was added, a stirring bar of about 2.5 mm was placed, and a wrap film was used for sealing. The sample was sonicated for 5 min and transferred to a magnetic stirrer and stirred at 500 rpm for more than 20 min, and two samples per batch were tested. The test was carried out using a Mastersizer Model 2000E laser particle size analyzer from Malvern Instruments Ltd., UK. Dv50 is a particle size corresponding to secondary particles with a cumulative volume distribution percentage reaching 50% in the positive electrode active material.

Dv50 of the positive electrode active material is controlled to have an appropriate range, so that the battery thereof has a high volumetric energy density and excellent power performance and mechanical strength.

In some implementations, the specific surface area of the positive electrode active material is 0.1 $m^2/g$ to 1.0 $m^2/g$. In some implementations, the specific surface area of the positive electrode active material is 0.2 $m^2/g$ to 0.5 $m^2/g$. In some implementations, the specific surface area of the positive electrode active material is 0.1 $m^2/g$, 0.2 $m^2/g$, 0.3 $m^2/g$, 0.4 $m^2/g$, 0.5 $m^2/g$, 0.6 $m^2/g$, 0.7 $m^2/g$, 0.8 $m^2/g$, 0.9 $m^2/g$, 1.0 $m^2/g$, or a value in a range consisting of any two of the above values.

Herein, the specific surface area of the positive electrode active material may be tested by any means known in the art. In an example, refer to GB/T 19587-2017 "Determination of Specific Surface Area of Solid Substances by the Gas Adsorption BET Method". The measurement was carried out using an apparatus TriStar II 3020. The positive electrode active material was dispersed in a dispersing agent (ethanol); after 30 minutes of sonication, the resulting material was dried in a vacuum drying oven; and finally, the specific surface area of the positive electrode active material was measured using a specific surface area tester.

The specific surface area of the positive electrode active material is controlled to be within an appropriate range, so that the battery thereof has a high volumetric energy density and excellent power performance and mechanical strength.

In some implementations, the positive electrode active material includes a first positive electrode material and a second positive electrode material.

It can be understood that the first positive electrode material and the second positive electrode material are different in size. When the first positive electrode material and the second positive electrode material are used in combination, there is a synergistic effect between the two materials, which facilitates improvement of the compacted density of the positive electrode sheet and improvement of the mechanical performance and the cycle performance of the battery thereof.

In some implementations, the first positive electrode material has the pore and the second positive electrode material is of a solid structure.

In some implementations, the first positive electrode material is of a solid structure and the second positive electrode material has the pore.

In some implementations, each of the first positive electrode material and the second positive electrode material has the pore.

The pores can shorten the solid-phase mass transfer path of lithium ions, improve the power performance of the battery, and expose more (010) crystal planes, thereby generating more reaction active sites, and improving the gram volumes and the energy densities of the materials.

In some implementations, the mass ratio A of the first positive electrode material to the second positive electrode material and the porosity B of the positive electrode active material meet $0 \leq |B - A \times 0.4 - (1-A) \times 0.2| \leq 1$. In some implementations, the relationship expression $0 \leq |B - A \times 0.4 - (1-A) \times 0.2| \leq 1$ between the mass ratio A of the first positive electrode material to the second positive electrode material and the porosity B of the positive electrode active material may meet 0, 0.1, 0.2, 0.3, 0.4, 0.5, 0.6, 0.7, 0.8, 0.9, 1.0, or a value in a range consisting of any two of the above values.

Herein, the relationship expression "$|B - A \times 0.4 - (1-A) \times 0.2|$" is expressed as an absolute value of a value of $B - A \times 0.4 - (1-A) \times 0.2$.

The mass ratio of the first positive electrode material to the second positive electrode material and the porosity of the positive electrode active material are controlled to meet the above relationship, to provide sufficient pores to shorten the solid-phase mass transfer path of lithium ions, thereby improving the power performance of the battery, adjusting the interaction force between the first positive electrode material and the second positive electrode material, and improving the mechanical performance of the battery thereof.

In some implementations, the mass ratio A of the first positive electrode material to the second positive electrode material is 1.5 to 9. In some implementations, the mass ratio A of the first positive electrode material to the second positive electrode material is 2 to 8. In some implementations, the mass ratio A of the first positive electrode material to the second positive electrode material is 1.5, 2, 2.5, 3, 3.5, 4, 4.5, 5, 5.5, 6, 6.5, 7, 7.5, 8, 8.5, 9, or a value in a range consisting of any two of the above values.

The mass ratio of the first positive electrode material to the second positive electrode material is controlled to be within an appropriate range, to take into account both the compacted density of the positive electrode sheet and the mechanical strength of the battery thereof.

In some implementations, the porosity B of the positive electrode active material is 0.15% to 0.45%. In some implementations, the porosity B of the positive electrode active material is 0.25% to 0.35%. In some implementations, the porosity B of the positive electrode active material is 0.15%, 0.2%, 0.25%, 0.3%, 0.35%, 0.4%, 0.45%, or a value in a range consisting of any two of the above values.

The porosity of the positive electrode active material is controlled to be within an appropriate range, to provide sufficient pores to shorten the solid-phase mass transfer path of lithium ions, thereby improving the power performance of the battery, and avoiding or reducing an impact of the pores on the mechanical strength of the positive electrode active material.

In some implementations, each of the first positive electrode material and the second positive electrode material independently has a chemical formula as follows:

$$Li_aNi_xM1_yM2_{1-x-y}O_2;$$

and

each of M1 and M2 includes one or a plurality of Co, Mn, Al, B, Zr, Sr, Y, Sb, W, Ti, Mg, or Nb, and $0.8 \leq a \leq 1.2$, $0.55 \leq x \leq 1.0$, and $0 \leq y \leq 0.45$. In some implementations, $0.8 \leq a \leq 1.2$, $0.95 \leq x \leq 0.995$, and $0 \leq y \leq 0.05$.

Each of the first positive electrode material and the second positive electrode material having the above chemical formula has a high volumetric energy density.

In some implementations, Dv50 of the first positive electrode material is 8 μm to 18 μm. In some implementations, Dv50 of the first positive electrode material is 10 μm to 12 μm. In some implementations, Dv50 of the first positive electrode material is 8 μm, 9 μm, 10 μm, 11 μm, 12 μm, 13 μm, 14 μm, 15 μm, 16 μm, 17 μm, 18 μm, or a value in a range consisting of any two of the above values.

In some implementations, Dv50 of the second positive electrode material is 0.8 μm to 5 μm. In some implementations, Dv50 of the second positive electrode material is 1 μm to 3 μm. In some implementations, Dv50 of the second positive electrode material is 0.8 μm, 1.5 μm, 2 μm, 2.5 μm, 3 μm, 3.5 μm, 4 μm, 4.5 μm, 5 μm, or a value in a range consisting of any two of the above values.

Herein, a test method for Dv50 of the first positive electrode material and Dv50 of the second positive electrode material is the same as a test method for Dv50 of the positive electrode active material.

Dv50 of the first positive electrode material and Dv50 of the second positive electrode material are controlled to be within appropriate ranges, to facilitate the synergistic effect between the first positive electrode material and the second positive electrode material, thereby facilitating improvement of the volumetric energy density and the mechanical performance of the battery thereof.

In some implementations, a ratio of a difference between Dv90 and Dv50 of the first positive electrode material to Dv50 of the first positive electrode material meets 0.6 to 1.2. In some implementations, a ratio of a difference between Dv90 and Dv50 of the first positive electrode material to Dv50 of the first positive electrode material meets 0.8 to 1.0. In some implementations, a ratio of a difference between Dv90 and Dv50 of the first positive electrode material to Dv50 of the first positive electrode material meets 0.6, 0.7, 0.8, 0.9, 1.0, 1.1, 1.2, or a value in a range consisting of any two of the above values.

In some implementations, a ratio of a difference between Dv50 and Dv10 of the first positive electrode material to Dv10 of the first positive electrode material meets 1.2 to 2.5. In some implementations, a ratio of a difference between Dv50 and Dv10 of the first positive electrode material to Dv10 of the first positive electrode material meets 1.5 to 2.0. In some implementations, a ratio of a difference between Dv50 and Dv10 of the first positive electrode material to Dv10 of the first positive electrode material meets 1.2, 1.3, 1.4, 1.5, 1.6, 1.7, 1.8, 1.9, 2.0, 2.1, 2.2, 2.3, 2.4, 2.5, or a value in a range consisting of any two of the above values.

In some implementations, a ratio of a difference between Dv90 and Dv50 of the second positive electrode material to Dv50 of the second positive electrode material meets 0.8 to 1.5. In some implementations, a ratio of a difference between Dv90 and Dv50 of the second positive electrode material to Dv50 of the second positive electrode material meets 1.0 to 1.3. In some implementations, a ratio of a difference between Dv90 and Dv50 of the second positive electrode material to Dv50 of the second positive electrode material meets 0.8, 0.9, 1.0, 1.1, 1.2, 1.3, 1.4, 1.5, or a value in a range consisting of any two of the above values.

In some implementations, a ratio of a difference between Dv50 and Dv10 of the second positive electrode material to Dv10 of the second positive electrode material meets 6 to 12. In some implementations, a ratio of a difference between Dv50 and Dv10 of the second positive electrode material to Dv10 of the second positive electrode material meets 8 to 10. In some implementations, a ratio of a difference between Dv50 and Dv10 of the second positive electrode material to Dv10 of the second positive electrode material meets 6, 6.5, 7, 7.5, 8, 8.5, 9, 9.5, 10, 10.5, 11, 11.5, 12, or a value in a range consisting of any two of the above values.

Herein, Dv90 is a particle size corresponding to secondary particles with a cumulative volume distribution percentage reaching 90% in the first positive electrode material/the second positive electrode material, and Dv10 is a particle size corresponding to secondary particles with a cumulative volume distribution percentage reaching 10% in the first positive electrode material/the second positive electrode material.

A particle size distribution of the first positive electrode material and a particle size distribution of the second positive electrode material are controlled to be within appropriate ranges, to facilitate the synergistic effect between the first positive electrode material and the second positive electrode material, thereby improving the mechanical performance of the battery, and improving the compacted density of the positive electrode sheet.

[Anode plate]

A positive electrode sheet includes a positive electrode current collector and a positive electrode film layer disposed on at least one surface of the positive electrode current collector, and the positive electrode film layer includes the positive electrode active material in some implementations.

As an example, the positive electrode current collector has two surfaces opposed in its own thickness direction, and the positive electrode film layer is provided on either one or both of the two opposed surfaces of the positive electrode current collector.

In some implementations, the areal density of the positive electrode film layer is 24 mg/cm$^2$ to 46 mg/cm$^2$. In some implementations, the areal density of the positive electrode film layer is optionally 24 mg/cm$^2$, 25 mg/cm$^2$, 26 mg/cm$^2$, 28 mg/cm$^2$, 30 mg/cm$^2$, 32 mg/cm$^2$, 34 mg/cm$^2$, 35 mg/cm$^2$, 36 mg/cm$^2$, 38 mg/cm$^2$, 40 mg/cm$^2$, 42 mg/cm$^2$, 44 mg/cm$^2$, 45 mg/cm$^2$, 46 mg/cm$^2$, or a value in a range consisting of any two of the above values.

The coating areal density of the positive electrode film layer was determined by measuring the coating weight (g) of the positive electrode film layer on one side and the coating area (cm$^2$) of the positive electrode film layer on one side (collection points L 14). Specifically, the coating areal density of the positive electrode film layer = the coating weight (g) of the positive electrode film layer on one side/the coating area (cm$^2$) of the positive electrode film layer.

In some implementations, the thickness of the positive electrode film layer is 200 μm to 400 μm. In some implementations, the thickness of the positive electrode film layer is 220 μm to 300 μm. In some implementations, the thickness of the positive electrode film layer is optionally 200 μm, 220 μm, 240 μm, 250 μm, 260 μm, 280 μm, 300 μm, 320 μm, 340 μm, 350 μm, 360 μm, 380 μm, 400 μm, or a value in a range consisting of any two of the above values.

The thickness of the positive electrode film layer is controlled to be within an appropriate range, to provide sufficient positive electrode active materials, thereby improving the energy density of a battery, and reducing an impact on solid-phase mass transfer of lithium ions. The energy density and the power performance of the battery are taken into account.

In some implementations, the compacted density of the positive electrode film layer is 2.9 g/m$^2$ to 3.5 g/m$^2$. In some implementations, the compacted density of the positive electrode film layer is optionally 2.9 g/m$^2$, 3.0 g/m$^2$, 3.1 g/m$^2$, 3.2 g/m$^2$, 3.3 g/m$^2$, 3.4 g/m$^2$, 3.5 g/m$^2$, or a value in a range consisting of any two of the above values.

Herein, the compacted density of the positive electrode film layer of the positive electrode sheet may be tested by any known test method. In an example, the compacted density of the positive electrode film layer of the positive electrode sheet was determined by measuring the areal density (g/cm$^2$) of the positive electrode film layer on one side and the thickness (cm) of the positive electrode film layer on one side (collection points ⌞ 14). Specifically, the compacted density of the positive electrode film layer = the areal density (g/cm$^2$) of the positive electrode film layer on one side/the thickness (cm) of the positive electrode film layer.

The positive electrode sheet having a high compacted density of the positive electrode film layer facilitates improvement of a volumetric energy density.

In some embodiments, the positive electrode current collector may use a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some implementations, the positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some implementations, the positive electrode film layer further optionally includes a conductive agent. As an example, the conductive agent may include at least one of superconducting carbon, acetylene black, carbon black, ketjen black, carbon dots, carbon nanotubes, graphene, and carbon nanofibers.

In some implementations, the positive electrode tab may be prepared by dispersing the above components for preparing a positive electrode tab, for example, a positive electrode active material, a conductive agent, a binder, and any other components in a solvent (for example, N-methylpyrrolidone) to form a positive electrode slurry, and applying the positive electrode slurry to a positive electrode current collector, followed by drying, cold pressing, and the like.

[Cathode plate]

A negative electrode sheet includes a negative electrode current collector and a negative electrode film layer disposed on at least one surface of the negative electrode current collector.

As an example, the negative electrode current collector has two surfaces opposite in its own thickness direction, and the negative electrode film layer is disposed on either one or both of the two opposite surfaces of the negative electrode current collector.

In some embodiments, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some embodiments, the negative electrode active material may be a negative electrode active material well-known in the art for batteries. As an example, the negative electrode active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and another conventional material that can be used as a negative electrode active material of a battery may also be used. These negative electrode active materials may be used alone or in combination of two or more thereof.

In some implementations, the negative electrode active material contains silicon oxide.

In some implementations, the mass content of silicon oxide is 20% to 100% based on the total mass of the negative electrode active material. In some implementations, the mass content of silicon oxide is 50% to 100% based on the total mass of the negative electrode active material.

In some implementations, the negative electrode film layer optionally further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes another auxiliary agent, for example, a thickening agent (e.g., sodium carboxymethyl cellulose (CMC-Na)).

In some embodiments, the negative electrode sheet may be prepared in the following manner: dispersing the above-mentioned components for preparing the negative electrode sheet, for example, the negative electrode active material, the conductive agent, the binder, and any other component in a solvent (e.g., deionized water) to form a negative electrode slurry; and coating the negative electrode slurry on the negative electrode current collector, and performing procedures such as drying and cold pressing, to obtain the negative electrode sheet.

[Separator]

In some embodiments, the secondary battery further includes a separator. Any known separator of a porous structure with good chemical stability and mechanical stability may be used.

In some embodiments, a material of the separator may be selected from at least one of glass fibers, nonwoven fabrics, polyethylene, polypropylene, and polyvinylidene fluoride. The separator may be a single-layer film or a multilayer composite film. When the separator is a multilayer composite film, the materials of respective layers may be the same or different.

In some embodiments, the positive electrode sheet, the negative electrode sheet, and the separator may be manufactured into the electrode assembly through a winding process or a lamination process.

In some implementations, the secondary battery includes the negative electrode sheet, the separator, an electrolyte, and the positive electrode sheet in some implementations.

In some implementations, the secondary battery includes a lithium secondary battery.

In some implementations, the energy density of the secondary battery is 700 Wh/L to 900 Wh/L.

In some embodiments, the secondary battery may include an outer package. The outer package may be used to encapsulate the electrode assembly and the electrolyte described above.

In some implementations, the outer package of the secondary battery may be a hard case, such as a hard plastic case, an aluminum case, a steel case, or the like. The outer package of the secondary battery may also be a pouch, such as a bag-type pouch. The material of the pouch may be plastic, and examples of the plastic include polypropylene, polybutylene terephthalate, and polybutylene succinate.

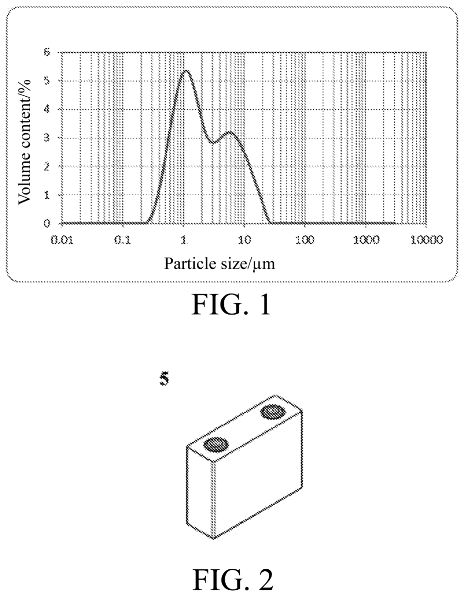

The shape of the secondary battery in the present application may be a cylindrical shape, a square shape, or any other shape. For example, FIG. 2 shows a secondary battery 5 of a square structure as an example.

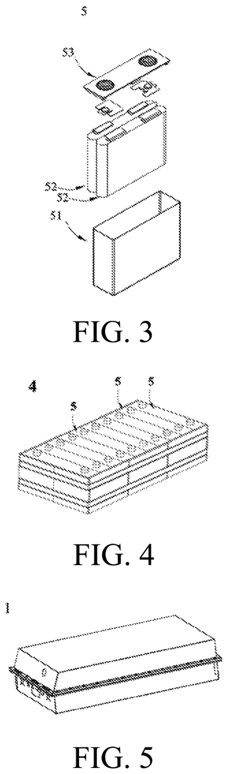

In some implementations, refer to FIG. 3. An outer package may include a housing 51 and a cover plate 53. The housing 51 may include a bottom plate and side plates connected to the bottom plate, and the bottom plate and the side plates may enclose an accommodating chamber. The housing 51 has an opening in communication with the accommodating chamber, and the cover plate 53 can cover the opening to seal the accommodating chamber. The positive electrode sheet, the negative electrode sheet, and the separator may be formed into an electrode assembly 52 through a winding process or a lamination process. The electrode assembly 52 is enclosed within the accommodation chamber. The electrolyte is impregnated into the electrode assembly 52. There may be one or more electrode assemblies 52 included in the secondary battery 5, and the quantity may be selected by those skilled in the art according to specific practical requirements.

In some implementations, the secondary batteries may be assembled into a battery module, and there may be one or a plurality of secondary batteries included in the battery module, and the specific number may be selected by those skilled in the art according to the application and capacity of the battery module.

FIG. 4 shows a battery module 4 as an example. Referring to FIG. 4, in the battery module 4, a plurality of secondary batteries 5 may be arranged in series in the longitudinal direction of the battery module 4. Certainly, the secondary batteries may alternatively be arranged in any other manner. Further, the plurality of secondary batteries 5 may be fixed by fasteners.

Optionally, the battery module 4 may further include a housing with an accommodating space. The plurality of secondary batteries 5 are accommodated in the accommodating space.

In some implementations, the battery modules may be further assembled into a battery pack, and there may be one or a plurality of battery modules included in the battery pack, and the specific number may be selected by those skilled in the art according to the application and capacity of the battery pack.

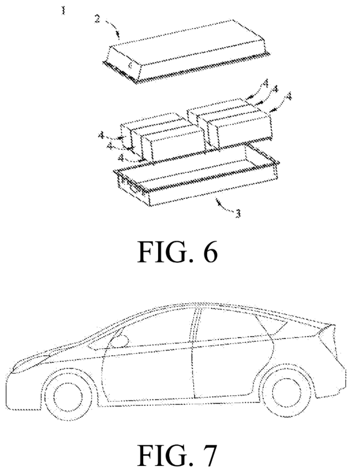

FIG. 5 and FIG. 6 show a battery pack 1 as an example. Referring to FIG. 5 and FIG. 6, a battery case and a plurality of battery modules 4 disposed in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery box.

In addition, the present application further provides an electric device including at least one of a secondary battery, a battery module, or a battery pack provided by the present application. The secondary battery, the battery module, or the battery pack may be used as a power source of the electric device and may also be used as an energy storage unit of the electric device. The electric device may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

The secondary battery, the battery module, or the battery pack may be selected according to use requirements of the electric device.

FIG. 7 shows an electric device as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the apparatus may be a cell phone, a tablet computer, a notebook computer, or the like. This electric device is generally required to be thin and lightweight, and may use a secondary battery as a power supply.

**Examples**

Embodiments of the present application are described below. The example described below are illustrative only and are not to be construed as limiting the present application. In the embodiments, specific techniques or conditions are not indicated, and they are performed according to techniques or conditions described in documents in the art or according to the specification of the product. The reagents or instruments used without specifying the manufacturer(s) are conventional products that are commercially available.

**I. Preparation Method**

Embodiment 1

(1) Preparation of Positive Electrode Active Material

Preparation of a first positive electrode material:

A nickel-cobalt-manganese solution was prepared at the molar ratio of a nickel element to a cobalt element to a manganese element being 96:1:3, and the concentration was adjusted to 2 mol/L, where nickel sulfate, cobalt sulfate, and manganese sulfate were used as raw materials for soluble nickel-cobalt-manganese, and the molar concentration of manganese ions was 0.25 mol/L; a 3 mol/L sodium hydroxide solution was prepared; and a 5.5 mol/L aqueous ammonia solution was prepared.

In a nitrogen atmosphere, the above nickel-cobalt-manganese solution, sodium hydroxide solution, and aqueous ammonia solution were simultaneously added to a reaction kettle to carry out a co-precipitation reaction, where the rotation speed was controlled to be 400 rpm, the temperature was 110°C, the duration was 8 hours, the pH of a system was controlled to be 9.5, and the concentration of aqueous ammonia was 6 mol/L. After completion of the co-precipitation reaction, the reaction mass was transferred to a slurry tank, aged, washed, dehydrated, then dried in an oven at 115°C for 9 h, and sieved and demagnetized to obtain a precursor having a plurality of pores annularly distributed.

The precursor and lithium hydroxide were uniformly mixed at a ratio, where the molar ratio of Li/Me was 1.03, and Me was the total molar content of nickel, cobalt, and manganese elements.

The uniformly mixed mass was put into a furnace for calcination, where the heating rate was set to 3°C/min, the temperature was maintained at 720°C for 20 h, an atmosphere was required to be oxygen content $\geq$ 98%; and then the mass was cooled with the furnace to obtain a base material.

The base material, cobalt boride, and titanium boride were mixed in a high mixer at the mass ratio of 1:0.015:0.0041 in the nitrogen atmosphere, and then the mixture was calcined in the furnace at the calcination temperature of 320°C for 5 h in the nitrogen atmosphere to obtain a product. The product was washed with water for 30 min, centrifuged, filtered, and then vibration-dried to obtain the first positive electrode material including a plurality of pores formed by using spaces between the primary particles of the first positive electrode material.

Preparation of a second positive electrode material:

A nickel-cobalt-manganese solution was prepared at the molar ratio of a nickel element to a cobalt element to a manganese element being 96:1:3, and the concentration was adjusted to 2.0 mol/L, where nickel sulfate, cobalt sulfate, and manganese sulfate were used as raw materials for soluble nickel-cobalt-manganese; a 2 mol/L sodium hydroxide solution was prepared; and a 6 mol/L aqueous ammonia solution was prepared.

The above nickel-cobalt-manganese solution, sodium hydroxide solution, and aqueous ammonia solution were simultaneously added to a reaction kettle to carry out a co-precipitation reaction, where the rotation speed was controlled to be 850 rpm, the temperature was 55°C, and the duration was 5 h. The flow rates of the three solutions were adjusted, where the flow rate of the sodium hydroxide solution was 0.6 L/min, the flow rate of the aqueous ammonia solution was 0.6 L/min, and the flow rate of the nickel-cobalt-manganese solution was 0.3 L/min; and the pH of a system was controlled to be 10.3.

After completion of the co-precipitation reaction, the precipitate obtained after the reaction was transferred to a slurry tank, aged, washed, dehydrated, dried in an oven at 110°C for 12 h, and sieved and demagnetized to obtain a positive electrode active material precursor.

The precursor and lithium hydroxide were uniformly mixed at a ratio, where the molar ratio of Li/Me was 1.03, and Me was the total molar content of nickel, cobalt, and manganese elements.

The uniformly mixed mass was put into a furnace for calcination, where the heating rate was set to 3°C/min, the temperature was maintained at 700°C for 15 h, an atmosphere was required to be oxygen content $\geq$ 98%; and then the mass was cooled with the furnace to obtain a base material.

The base material, cobalt boride, and titanium boride were mixed in a high mixer at the mass ratio of 1:0.015:0.0041 in the nitrogen atmosphere, and then the mixture was calcined in the furnace at the calcination temperature of 300°C for 4 h in the nitrogen atmosphere to obtain a product. The product was washed with water for 30 min, centrifuged, filtered, and then vibration-dried to obtain the second positive electrode material of a solid structure.

Preparation of a positive electrode active material: The first positive electrode material and the second positive electrode material were uniformly mixed at the mass ratio of 6:1 to obtain the positive electrode active material.

(2) Preparation of Positive Electrode Sheet

A positive electrode active material, carbon black as a conductive agent, and polyvinylidene fluoride (PVDF) as a binder were added to N-methylpyrrolidone (NMP) at the mass ratio of 97:1:2, and were mixed and stirred with N-methylpyrrolidone for 0.5 h to 6 h to obtain a positive electrode slurry; and the positive electrode slurry was uniformly coated on a positive electrode current collector aluminum foil to obtain a positive electrode film layer, and the positive electrode film layer was dried, cold-pressed, and slit to obtain the positive electrode sheet.

(3) Preparation of Negative Electrode Sheet

Artificial graphite doped with silicon oxide (SIO), carbon black as a conductive agent, carbon nanotubes (CNT), styrene-butadiene rubber (SBR) as a binder, and sodium carboxymethyl cellulose (CMC) as a thickener were added to deionized water at the weight ratio of 94.5:1:0.375:2.8:1.325, and mixed and stirred with the deionized water for 5 h to obtain a negative active substance layer slurry, where the mass fraction of SIO was 30% based on the mass of the artificial graphite; the negative active substance layer slurry was uniformly coated on a negative electrode current collector copper foil in layers, and dried, cold-pressed, and slit to obtain the negative electrode sheet.

(4) Electrolyte

In a glove box in an argon atmosphere ($H_2O$<0.1 ppm, $O_2$<0.1 ppm), a lithium salt $LiPF_6$/LIFSI was dissolved in a solvent of an organic solvent ethylene carbonate/ethyl methyl carbonate/diethyl carbonate/fluoroethylene carbonate (at the volume ratio of 1:1:1:1), and the solution was stirred uniformly to obtain an electrolyte having the lithium salt concentration of 1 mol/L.

(5) Separator

A polypropylene film was used as a base film, and 1 $\mu$m of alumina (CCS) + 1 $\mu$m of polyvinylidene fluoride (PCS) were coated on the base film.

(6) Preparation of Battery

The positive electrode plate, the separator, and the negative electrode plate were stacked in order, where the separator was located between the positive and negative electrode plates to play a separating role, and the positive electrode plate, the separator, and the negative electrode plate were wound to obtain a bare cell, a tab was welded to the bare cell, and the bare cell was enclosed in an aluminum case and baked at 80 °C to remove water, and then the electrolyte solution was injected and the aluminum case was sealed to obtain an uncharged battery. The uncharged battery was further subjected to steps such as standing, hot and cold pressing, chemical forming, shaping, and capacity testing sequentially to obtain the lithium battery product of Embodiment 1.

Embodiments 2 to 4

Batteries of Embodiments 2 to 4 were prepared by using methods similar to that of the battery of Embodiment 1, but the preparation method of the positive electrode active material was adjusted, so that the inner diameter of the pores of the first positive electrode material was different. Specific parameters were shown in Table 1.

Embodiment 5

A battery of Embodiment 5 was prepared by using a method similar to that of the battery of Embodiment 1, but the preparation method of the first positive electrode material was adjusted, so that the first positive electrode material included a single hollow pore at a central position that is enclosed by primary particles of a first positive electrode active material. A specific preparation method was as follows:
A nickel-cobalt-manganese solution was prepared at the molar ratio of a nickel element to a cobalt element to a manganese element being 96:1:3, and the concentration was adjusted to 1.9 mol/L, where nickel sulfate, cobalt sulfate, and manganese sulfate were used as raw materials for soluble nickel-cobalt-manganese; a 2 mol/L sodium hydroxide solution was prepared; a 6 mol/L aqueous ammonia solution was prepared; and a carbon sphere dispersion with the mass concentration of 10 g/L was prepared, placed in a reaction kettle, and stirred at 850 rpm for 120 min to implement uniform dispersion. Carbon sphere specification: The diameter was 0.20 $\mu$m.
The above nickel-cobalt-manganese solution, sodium hydroxide solution, and aqueous ammonia solution were simultaneously added to the reaction kettle to carry out a co-precipitation reaction, where the rotation speed was controlled to be 850 rpm, the temperature was 55°C, and the duration was 5 h. The flow rates of the three solutions were adjusted, where the flow rate of the sodium hydroxide solution was 0.6 L/min, the flow rate of the aqueous ammonia solution was 0.6 L/min, and the flow rate of the nickel-cobalt-manganese solution was 0.3 L/min; and the pH of a system was controlled to be 10.3. The ratio of the weight of the carbon spheres to the total weight of nickel, cobalt, and manganese in the nickel-cobalt-manganese solution was 2:18.

After completion of the co-precipitation reaction, the reaction mass overflowed into an aging tank, a few washing additives were added, the above components were stirred for 1 hour, and then the mass was dehydrated, washed with water, secondarily dehydrated, dried and sieved, and demagnetized to obtain a positive electrode active material precursor having the carbon spheres at the center.

The positive electrode active material precursor and lithium carbonate were uniformly mixed at a ratio, where the molar ratio of Li/Me was 1.02, and Me was the total molar content of nickel, cobalt, and manganese elements.

The uniformly mixed mass was put into a furnace with an oxygen atmosphere, where the heating rate was set to 5°C/min, the temperature was maintained at 705°C for 6 h, an atmosphere was required to be oxygen content $\geq$ 98%; and then the mass was cooled with the furnace.

The mass obtained after calcination was subjected to roller crushing, ultracentrifugal grinding and pulverization, and then sieved through a 400-mesh sieve, to obtain the first positive electrode material including a single hollow pore at a central position that is enclosed by primary particles of the first positive electrode active material.

Embodiments 6 to 31

Batteries of Embodiments 6 to 31 were prepared by using methods similar to that of the battery of Embodiment 5, but the preparation method of the positive electrode active material was adjusted. Specific parameters were shown in Table 1.

Embodiment 32

A battery of Embodiment 32 was prepared by using a method similar to that of the battery of Embodiment 5, but the preparation method of the second positive electrode material was adjusted, so that the second positive electrode material included a single hollow pore at a central position that is enclosed by primary particles of a second positive electrode active material. Specific parameters were shown in Table 1.

Embodiment 33

A battery of Embodiment 33 was prepared by using a method similar to that of the battery of Embodiment 32, but the preparation method of the second positive electrode material was adjusted, so that the second positive electrode material included a plurality of pores formed by using spaces between primary particles of the second positive electrode material. Specific parameters were shown in Table 1.

Embodiment 34

A battery of Embodiment 34 was prepared by using a method similar to that of the battery of Embodiment 2, but the preparation method of the second positive electrode material was adjusted, so that the second positive electrode material included a single hollow pore at a central position that is enclosed by primary particles of a first positive electrode active material. Specific parameters were shown in Table 1.

Embodiment 35

A battery of Embodiment 35 was prepared by using a method similar to that of the battery of Embodiment 34, but the preparation method of the second positive electrode material was adjusted, so that the second positive electrode material included a plurality of pores formed by using spaces between primary particles of the second positive electrode material. Specific parameters were shown in Table 1.

Embodiment 36

A battery of Embodiment 36 was prepared by using a method similar to that of the battery of Embodiment 32, but the preparation method of the first positive electrode material was adjusted, so that the first positive electrode material was of a solid structure. Specific parameters were shown in Table 1.

Embodiment 37

A battery of Embodiment 37 was prepared by using a method similar to that of the battery of Embodiment 33, but the preparation method of the first positive electrode material was adjusted, so that the first positive electrode material was of a solid structure. Specific parameters were shown in Table 1.

Comparative Example 1

A battery of Comparative Example 1 was prepared by using a method similar to that of the battery of Embodiment 5, but the positive electrode active material included only a first positive electrode material of a hollow structure and did not include a second positive electrode material. Specific parameters were shown in Table 1.

Comparative Example 2

A battery of Comparative Example 2 was prepared by using a method similar to that of the battery of Embodiment 33, but the positive electrode active material included only a second positive electrode material having pores annularly arranged and did not include a first positive electrode material. Specific parameters were shown in Table 1.

Comparative Example 3

A battery of Comparative Example 3 was prepared by using a method similar to that of the battery of Embodiment 2, but the positive electrode active material included only a first positive electrode material having pores annularly arranged and did not include a second positive electrode material. Specific parameters were shown in Table 1.

Comparative Example 4

A battery of Comparative Example 4 was prepared by using a method similar to that of the battery of Embodiment 32, but the positive electrode active material included only a second positive electrode material of a hollow structure and did not include a first positive electrode material. Specific parameters were shown in Table 1.

Comparative Example 5

A battery of Comparative Example 5 was prepared by using a method similar to that of the battery of Embodiment 1, but the positive electrode active material included a first positive electrode material of a solid structure and a second positive electrode material of a solid structure. Specific parameters were shown in Table 1.

Comparative Example 6

A battery of Comparative Example 6 was prepared by using a method similar to that of the battery of Embodiment 1, but parameters of the preparation method of the positive electrode active material were adjusted, so that a difference between a peak position of a second peak and a peak position of a first peak in a particle size distribution diagram of the positive electrode active material was 15 $\mu$m. Specific parameters were shown in Table 1.

Comparative Example 7

A battery of Comparative Example 7 was prepared by using a method similar to that of the battery of Embodiment 1, but parameters of the preparation method of the positive electrode active material were adjusted, so that a difference between a peak position of a second peak and a peak position of a first peak in a particle size distribution diagram of the positive electrode active material was 2 $\mu$m. Specific parameters were shown in Table 1.

II. **Performance tests**

1. Performance Tests of Positive Electrode Active Material

(1) Pore inner diameter test

A conductive adhesive was adhered to a sample stage, a powdery sample of the positive electrode active material in each of the embodiments and the comparative examples was laid on the conductive adhesive, non-adhered powder was blown off with an ear washing ball, metal spraying was performed, and cross-sectional cutting was performed on particles of the powdery sample by using argon gas plasma. A scanning electron microscope photograph of the powdery sample was obtained by using a scanning electron microscope (for example, ZEISS Sigma 300) under conditions of an acceleration voltage of 10 kV and an emission current of 10 mA. The inner diameter size of the pores was measured according to the SEM photograph. At least three samples were measured, data of at least 50 pores was measured for each sample, and a number-average value was taken as the inner diameter size of the pores of the sample.

(2) Difference Test Between First Peak Position and Second Peak Position

With reference to GB/T 19077-2016/ISO 13320:2009 Particle Size Distribution Laser Diffraction Method, the test was carried out using the apparatus Malvern 3000 to obtain a particle size distribution diagram based on a volume distribution, and the first peak position and the second peak position were measured from the particle size distribution diagram.

(3) Porosity Test

The porosity of the positive electrode active material may be tested using any means known in the art. In an example, the measurement was carried out by using a gas displacement method according to GB/T24586. The porosity = (V1-V2)/V1*100%, where V1 is the apparent volume of a sample and V2 is the true volume of the sample.

(4) Average Particle Size D Test of Primary Particles

After imaging was performed by using a scanning electron microscope (ZEISS Sigma-02-33, Germany) at a magnification of 500, 200 to 600 primary particles of the positive electrode active material that had a complete shape and were not shielded were randomly selected in an electron microscopic image thereof, and an average value of the longest diameters of the primary particles in the microscopic image was recorded as the average particle size D.

(5) Test of Dv90, Dv50, and Dv10

With reference to the GB/T 19077-2016 particle size distribution laser diffraction method, 0.1 g to 0.13 g of positive electrode active material/first positive electrode material/second positive electrode material sample to be tested was weighed in a 50 mL beaker, 5 g of anhydrous ethanol was added, a stirring bar of about 2.5 mm was placed, and a wrap film was used for sealing. The sample was sonicated for 5 min and transferred to a magnetic stirrer and stirred at 500 rpm for more than 20 min, and two samples per batch were tested. The test was carried out using a Mastersizer Model 2000E laser particle size analyzer from Malvern Instruments Ltd., UK. Dv90 is a particle size corresponding to secondary particles with a cumulative volume distribution percentage reaching 90% in the first positive electrode material/the second positive electrode material, Dv50 is a particle size corresponding to secondary particles with a cumulative volume distribution percentage reaching 50% in the positive electrode active material/the first positive electrode material/the second positive electrode material, and Dv10 is a particle size corresponding to secondary particles with a cumulative volume distribution percentage reaching 10% in the first positive electrode material/the second positive electrode material.

(6) Test Method of Tap Density

The tap density of the positive electrode active material was tested with reference to GB/T 24533-2009 "Measurement of Tap Density of Metal Powder", an apparatus used for measurement was Dandong Better BT-300 Tap Density Meter.
Tap density: A mass per unit volume of powder tapped under specified conditions in a container. A calculation formula thereof was:

$$Pt=(m-m0)/V.$$

Pt: the tap density of the powder, $g/cm^3$;

m: the total mass of a measuring cylinder and a sample, g;

m0: the weight of the measuring cylinder, g; and

V: the tap volume of the powder, cm$^3$.

## 2. Performance Tests of Positive Electrode Sheet

### (1) Compacted Density of Positive Electrode Film Layer

The compacted density of the positive electrode film layer of the positive electrode sheet was determined by measuring the areal density (g/cm$^2$) of the positive electrode film layer on one side and the thickness (cm) of the positive electrode film layer on one side (collection points □ 14). Specifically, the compacted density of the positive electrode film layer = the areal density (g/cm$^2$) of the positive electrode film layer on one side/the thickness (cm) of the positive electrode film layer.

### (2) Shear Strength Test

A double-sided tap with the length of about 60 mm was cut, the double-sided tap was adhered along a longitudinal direction of the electrode sheet, and the electrode sheet was cut along an edge of the double-sided tap by using a blade. A steel plate with a flat appearance was selected, a surface of the steel plate was polished with a sandpaper, a piece of cotton gauze was soaked in alcohol and was used to wipe the surface of the steel plate, and then the steel plate was dried. The double-sided tape was adhered to the steel plate, with the distance between the bottom edge of the tape and the bottom edge of the steel plate being ∟ 1 cm. The steel plate was placed in an oven at 60°C to 80°C for 5 min, the steel plate was taken out, and an upper release paper on the tape was gently scraped off with the blade. The pre-cut electrode sheet was adhered to the double-sided tape on the steel plate, with a test surface facing downward. A 2 kg pressure roller was used to roll back and forth three times. A power supply of a Sansi tensile testing machine was turned on, an indicator light was illuminated, and a limit block was adjusted to an appropriate position. An end of the steel plate without the electrode sheet was fixed with a lower clamp, and an end of the electrode sheet not adhered to the steel plate was clamped with an upper clamp. The test was then carried out, and a value was read, with the tensile speed being 10 mm/min.

## 3. Battery Performance Tests

### (1) Volumetric Energy Density Test

Cell capacity test: A cell was stood still at 25°C for 2 h to ensure that the temperature of the cell was 25°C. At 25°C, the cell was charged at 0.1 C to a charge cut-off voltage of 4.25 V, and then constant-voltage charging was continued at the charge cut-off voltage until the current reached 0.05 C, and the charge was cut off (where C represents the rated capacity of the cell). The cell was stood still at 25°C for 1 h. The cell was discharged at 0.1 C to a discharge cut-off voltage of 2.5 V at 25°C, and a total discharge capacity C0 discharged from the cell was recorded, where total discharge energy was E0.
Cell volume measurement: The length, the width, and the height of the cell were measured by using a caliper, and the length, the width, and the height of the cell were multiplied to obtain the volume V0 of the cell.
Volumetric energy density calculation: The cell discharge energy E0/the cell volume V0 = the volumetric energy density of the cell.

### (2) Battery 40% SOC Discharge Time Test

The cell was discharged at a constant current of 0.33 C to 2.8 V, and then stood still for 30 min. The cell was charged at a constant current of 0.33 C to 4.25 V, then maintained at a constant voltage of 0.05 C until the voltage was stabilized, and stood still for 30 min. The cell was discharged at a constant current of 0.33 C to 2.8 V. In this case, the initial capacity C0 was read, and then the cell was stood still for 30 min. The cell was charged at a constant current of 0.33 C to 4.25 V, then maintained at a constant voltage of 0.05 C until the voltage was stabilized, and stood still for 30 min. The cell was discharged at a constant current of 0.33 C to the SOC of 0.4C0 Ah (40%), and then stood still for 60 min. The cell was discharged at a constant current of 4.5 C to 2.8 V, and the discharge time was recorded.

### (3) Cycle Performance Test

The secondary battery prepared in each of the embodiments and the comparative examples was charged at a constant current of 0.5 C to a charge cut-off voltage of 4.25 V, then charged at a constant voltage until the current dropped to ≤0.05 C, and stood still for 5 min. The secondary battery was discharged at a constant current of 0.33 C to a discharge cut-off voltage of 2.5 V, and stood still for 5 min. This process was defined as one charge-discharge cycle. According to this

## EP 4 691 997 A1

method, the battery was subjected to a cyclic charge-discharge test until the battery capacity was attenuated to 80%. In this case, the quantity of cycles is the cycle life of the battery at 25°C.

III. Analysis of test results of Examples and Comparative examples

The batteries in the embodiments and the comparative examples were separately prepared according to the above methods, and the performance parameters were measured. For results, refer to Table 1, Table 2, and Table 3 below.

Table 1

| No. | Positive electrode active material | | | | Positive electrode sheet |
| | Difference between a first peak position and a second peak position of a positive electrode active material/$\mu$m | Porosity of the positive electrode active material/% | Mass ratio of a first positive electrode material to a second positive electrode material | Tap density (g/cm$^2$) | Thickness/ $\mu$m |
|---|---|---|---|---|---|
| Embodiment 1 | 7 | 0.21 | 6 | 2.2 | 300 |
| Embodiment 2 | 8 | 0.2 | 6 | 2.1 | 300 |
| Embodiment 3 | 10 | 0.2 | 6 | 2.05 | 300 |
| Embodiment 4 | 11 | 0.22 | 6 | 1.9 | 300 |
| Embodiment 5 | 9 | 0.19 | 6 | 2.14 | 300 |
| Embodiment 6 | 6 | 0.18 | 6 | 2.2 | 300 |
| Embodiment 7 | 3 | 0.24 | 6 | 2.12 | 300 |
| Embodiment 8 | 6 | 0.18 | 6 | 2.12 | 300 |
| Embodiment 9 | 5 | 0.17 | 6 | 2.13 | 300 |
| Embodiment 10 | 7 | 0.16 | 6 | 2.2 | 300 |
| Embodiment 11 | 8 | 0.18 | 6 | 2.4 | 300 |
| Embodiment 12 | 6 | 0.16 | 6 | 2.5 | 300 |
| Embodiment 13 | 6 | 0.24 | 6 | 1.9 | 300 |
| Embodiment 14 | 5 | 0.22 | 6 | 2.25 | 300 |
| Embodiment 15 | 8 | 0.19 | 6 | 2.26 | 300 |
| Embodiment 16 | 9 | 0.23 | 6 | 2.27 | 300 |

(continued)

| No. | Positive electrode active material | | | | | Positive electrode sheet |
|---|---|---|---|---|---|---|
| | Difference between a first peak position and a second peak position of a positive electrode active material/$\mu$m | Porosity of the positive electrode active material/% | Mass ratio of a first positive electrode material to a second positive electrode material | Tap density (g/cm$^2$) | Thickness/$\mu$m | |
| Embodiment 17 | 8 | 0.24 | 6 | 2.28 | 300 | |
| Embodiment 18 | 7 | 0.17 | 6 | 2.4 | 300 | |
| Embodiment 19 | 6 | 0.19 | 6 | 2.15 | 300 | |
| Embodiment 20 | 4 | 0.16 | 6 | 2.36 | 300 | |
| Embodiment 21 | 6 | 0.18 | 6 | 2.18 | 300 | |
| Embodiment 22 | 8 | 0.17 | 6 | 2.05 | 300 | |
| Embodiment 23 | 7 | 0.16 | 6 | 2.1 | 300 | |
| Embodiment 24 | 7 | 0.19 | 6 | 2.2 | 300 | |
| Embodiment 25 | 8 | 0.18 | 6 | 2.15 | 300 | |
| Embodiment 26 | 6 | 0.21 | 1.5 | 2.3 | 300 | |
| Embodiment 27 | 6 | 0.2 | 8 | 2 | 300 | |
| Embodiment 28 | 9 | 0.23 | 2 | 2.28 | 300 | |
| Embodiment 29 | 10 | 0.22 | 9 | 1.96 | 300 | |
| Embodiment 30 | 9 | 0.17 | 6 | 2.3 | 200 | |
| Embodiment 31 | 9 | 0.19 | 6 | 2.3 | 400 | |
| Embodiment 32 | 8 | 0.16 | 6 | 2.16 | 300 | |
| Embodiment 33 | 8 | 0.24 | 6 | 2.14 | 300 | |
| Embodiment 34 | 7 | 0.22 | 6 | 2.14 | 300 | |
| Embodiment 35 | 9 | 0.21 | 6 | 2.13 | 300 | |
| Embodiment 36 | 8 | 0.18 | 6 | 2.12 | 300 | |

(continued)

| No. | Positive electrode active material | | | | | Positive electrode sheet |
|---|---|---|---|---|---|---|
| | Difference between a first peak position and a second peak position of a positive electrode active material/$\mu$m | Porosity of the positive electrode active material/% | Mass ratio of a first positive electrode material to a second positive electrode material | Tap density (g/cm$^2$) | | Thickness/ $\mu$m |
| Embodiment 37 | 7 | 0.19 | 6 | 2.1 | | 300 |
| Comparative Example 1 | / | 0.21 | / | 1.7 | | 300 |
| Comparative Example 2 | / | 0.23 | / | 1.72 | | 300 |
| Comparative Example 3 | / | 0.24 | / | 1.71 | | 300 |
| Comparative Example 4 | / | 0.18 | / | 1.7 | | 300 |
| Comparative Example 5 | 7 | 0.19 | 6 | 2.3 | | 300 |
| Comparative Example 6 | 15 | 0.16 | 6 | 1.5 | | 300 |
| Comparative Example 7 | 2 | 0.17 | 6 | 2.4 | | 300 |

Table 2

| No. | Positive electrode active material | | | | | | | |
|---|---|---|---|---|---|---|---|---|
| | First positive electrode material | | | | Second positive electrode material | | | |
| | Inner diameter of a pore/$\mu$m | DV50/ $\mu$m | (Dv90-Dv50) /Dv50 | (Dv50-Dv10) /Dv10 | Inner diameterof a pore/$\mu$m | DV50/ $\mu$m | (Dv90-Dv50) /Dv50 | (Dv50-Dv10) /Dv10 |
| Embodiment 1 | 0.1 | 12 | 0.8 | 2 | | 3 | 1.24 | 8.5 |
| Embodiment 2 | 0.2 | 12 | 0.8 | 2 | / | 3 | 1.24 | 8.5 |
| Embodiment 3 | 0.4 | 12 | 0.8 | 2 | / | 3 | 1.24 | 8.5 |
| Embodiment 4 | 0.6 | 12 | 0.8 | 2 | / | 3 | 1.24 | 8.5 |
| Embodiment 5 | 1 | 12 | 0.8 | 2 | / | 3 | 1.21 | 8.3 |
| Embodiment 6 | 3 | 12 | 0.8 | 2 | / | 3 | 1.3 | 9 |
| Embodiment 7 | 1.2 | 12 | 0.8 | 2 | / | 3 | 1.24 | 8.5 |
| Embodiment 8 | 0.8 | 12 | 0.8 | 2 | / | 3 | 1.18 | 8.2 |
| Embodiment 9 | 0.5 | 12 | 0.8 | 2 | / | 3 | 1.18 | 8.2 |
| Embodiment 10 | 1 | 8 | 0.8 | 2 | / | 3 | 1.3 | 7.8 |
| Embodiment 11 | 1 | 12 | 0.8 | 2 | / | 3 | 1.35 | 8 |
| Embodiment 12 | 1 | 10 | 0.8 | 2 | / | 3 | 1.16 | 8.3 |

(continued)

| No. | Positive electrode active material | | | | | | | |
|---|---|---|---|---|---|---|---|---|
| | First positive electrode material | | | | Second positive electrode material | | | |
| | Inner diameter of a pore/μm | DV50/ μm | (Dv90-Dv50) /Dv50 | (Dv50-Dv10) /Dv10 | Inner diameterof a pore/μm | DV50/ μm | (Dv90-Dv50) /Dv50 | (Dv50-Dv10) /Dv10 |
| Embodiment 13 | 1 | 18 | 0.8 | 2 | / | 3 | 1.4 | 9.5 |
| Embodiment 14 | 1 | 12 | 0.6 | 2 | / | 3 | 1.23 | 9.8 |
| Embodiment 15 | 1 | 12 | 1.2 | 2 | / | 3 | 1.23 | 9.8 |
| Embodiment 16 | 1 | 12 | 0.8 | 1.2 | / | 3 | 1.23 | 9.S |
| Embodiment 17 | 1 | 12 | 0.8 | 2.5 | / | 3 | 1.23 | 9.8 |
| Embodiment 18 | 1 | 12 | 0.8 | 2 | / | 0.8 | 1.23 | 9.8 |
| Embodiment 19 | 1 | 12 | 0.8 | 2 | / | 4 | 1.23 | 9.8 |
| Embodiment 20 | 1 | 12 | 0.8 | 2 | / | 1 | 1.23 | 9.8 |
| Embodiment 21 | 1 | 12 | 0.8 | 2 | / | 5 | 1.23 | 9.8 |
| Embodiment 22 | 1 | 12 | 0.8 | 2 | / | 3 | 1.5 | 9.8 |
| Embodiment 23 | 1 | 12 | 0.8 | 2 | / | 3 | 0.8 | 9.8 |
| Embodiment 24 | 1 | 12 | 0.8 | 2 | / | 3 | 1.18 | 12 |
| Embodiment 25 | 1 | 12 | 0.8 | 2 | / | 3 | 1.18 | 6 |
| Embodiment 26 | 1 | 12 | 0.8 | 2 | / | 3 | 1.18 | 9.6 |
| Embodiment 27 | 1 | 12 | 0.8 | 2 | / | 3 | 1.18 | 9.6 |
| Embodiment 28 | 1 | 12 | 0.8 | 2 | / | 3 | 1.18 | 9.6 |
| Embodiment 29 | 1 | 12 | 0.8 | 2 | / | 3 | 1.18 | 9.6 |
| Embodiment 30 | 1 | 12 | 0.8 | 2 | / | 3 | 1.18 | 9.6 |
| Embodiment 31 | 1 | 12 | 0.8 | 2 | / | 3 | 1.18 | 9.6 |
| Embodiment 32 | 1 | 12 | 0.8 | 2 | 1 | 3 | 1.18 | 9.6 |
| Embodiment 33 | 1 | 12 | 0.8 | 2 | 0.2 | 3 | 1.18 | 9.6 |

(continued)

| No. | Positive electrode active material | | | | | | | |
| --- | First positive electrode material | | | | Second positive electrode material | | | |
| | Inner diameter of a pore/$\mu$m | DV50/ $\mu$m | (Dv90-Dv50) /Dv50 | (Dv50-Dv10) /Dv10 | Inner diameterof a pore/$\mu$m | DV50/ $\mu$m | (Dv90-Dv50) /Dv50 | (Dv50-Dv10) /Dv10 |
| Embodiment 34 | 0.2 | 12 | 0.8 | 2 | 1 | 3 | 1.18 | 9.6 |
| Embodiment 35 | 0.2 | 12 | 0.8 | 2 | 0.2 | 3 | 1.18 | 9.6 |
| Embodiment 36 | / | 12 | 0.8 | 2 | 1 | 3 | 1.18 | 9.6 |
| Embodiment 37 | / | 12 | 0.8 | 2 | 0.2 | 3 | 1.18 | 9.6 |
| Comparative Example I | 1 | 12 | 0.8 | 2 | / | / | / | / |
| Comparative Example 1 | / | / | / | / | 0.2 | 3 | 1.18 | 9.6 |
| Comparative Example 1 | 0.2 | 12 | 0.8 | 2 | / | / | / | / |
| Comparative Example 1 | / | / | / | / | 1 | 3 | 1.18 | 9.6 |
| Comparative Example 1 | / | 12 | 0.8 | 2 | / | 3 | 1.18 | 9.6 |
| Comparative Example 1 | 5 | 15 | 0.9 | 2 | / | 3 | 1.15 | 14 |
| Comparative Example 1 | 0.1 | 2 | 0.7 | 2 | / | 3 | 1.14 | 7.8 |

Table 3

| No. | Positive electrode sheet | | Battery | | |
| --- | Tap density (g/cm$^2$) | Shear strength/Mpa | Volumetric energy density (Wh/L) | Discharge time/s | Cycle performance /cycles |
| Embodiment 1 | 3.5 | 0.9 | 790 | 125 | 1260 |
| Embodiment 2 | 3.45 | 0.85 | 787 | 136 | 1300 |
| Embodiment 3 | 3.4 | 0.8 | 785 | 148 | 1280 |
| Embodiment 4 | 3.2 | 0.78 | 760 | 152 | 1100 |
| Embodiment 5 | 3.3 | 0.9 | 846 | 134 | 1350 |
| Embodiment 6 | 3.5 | 1.2 | 848 | 124 | 1000 |
| Embodiment 7 | 3.32 | 0.91 | 765 | 133 | 1120 |
| Embodiment 8 | 3.25 | 0.73 | 842 | 132 | 1200 |
| Embodiment 9 | 3.3 | 0.89 | 768 | 130 | 1160 |
| Embodiment 10 | 3.4 | 1 | 826 | 134 | 1280 |
| Embodiment 11 | 3.42 | 0.9 | 860 | 141 | 1400 |
| Embodiment 12 | 3.4 | 0.85 | 852 | 135 | 1320 |

(continued)

| No. | Positive electrode sheet | | Battery | | |
|---|---|---|---|---|---|
| | Tap density (g/cm$^2$) | Shear strength/Mpa | Volumetric energy density (Wh/L) | Discharge time/s | Cycle performance /cycles |
| **Embodiment** 13 | 2.9 | 0.73 | 700 | 150 | 800 |
| Embodiment 14 | 3.1 | 0.9 | 760 | 149 | 880 |
| **Embodiment** 15 | 3 | 0.88 | 700 | 151 | 820 |
| Embodiment 16 | 2.95 | 0.86 | 700 | 152 | 798 |
| Embodiment 17 | 3.05 | 0.84 | 720 | 150 | 840 |
| Embodiment 18 | 3.15 | 0.86 | 790 | 144 | 880 |
| Embodiment 19 | 3.25 | 0.88 | 820 | 142 | 1000 |
| Embodiment 20 | 3.44 | 0.92 | 850 | 139 | 1200 |
| Embodiment 21 | 3.1 | 0.9 | 760 | 151 | 808 |
| Embodiment 22 | 3.05 | 0.73 | 700 | 141 | 820 |
| Embodiment 23 | 3.08 | 0.75 | 690 | 139 | 830 |
| Embodiment 24 | 3.09 | 0.8 | 710 | 131 | 800 |
| **Embodiment** 25 | 3.11 | 0.85 | 715 | 128 | 809 |
| Embodiment 26 | 3.2 | 0.82 | 745 | 115 | 850 |
| Embodiment 27 | 3.1 | 0.83 | 700 | 128 | 880 |
| Embodiment 28 | 3.22 | 0.85 | 750 | 120 | 920 |
| Embodiment 29 | 3.13 | 0.87 | 708 | 124 | 960 |
| Embodiment 30 | 3.45 | 0.98 | 620 | 155 | 1300 |
| Embodiment 31 | 3.15 | 0.73 | 790 | 118 | 820 |
| Embodiment 32 | 3.2 | 0.82 | 700 | 131 | 800 |
| Embodiment 33 | 3.19 | 0.84 | 750 | 128 | 809 |
| Embodiment 34 | 3.18 | 0.78 | 620 | 128 | 880 |
| Embodiment 35 | 3.19 | 0.82 | 790 | 120 | 920 |
| Embodiment 36 | 3.17 | 0.84 | 710 | 124 | 960 |
| Embodiment 37 | 3.16 | 0.99 | 715 | 118 | 820 |
| Comparative Example 1 | 2.8 | 0.72 | 600 | 158 | 500 |
| Comparative Example 1 | 2.75 | 0.7 | 550 | 155 | 400 |
| Comparative Example 1 | 2.75 | 0.71 | 580 | 156 | 480 |
| Comparative Example 1 | 2.7 | 0.71 | 500 | 153 | 380 |
| Comparative Example 1 | 3.3 | 0.78 | 690 | 90 | 460 |
| Comparative Example 1 | 2.8 | 0.6 | 660 | 142 | 490 |
| Comparative Example 1 | 2.75 | 0.75 | 670 | 121 | 480 |

According to the above tables, it can be learned that the positive electrode active material in each of Embodiments 1 to 37 was present in a form of secondary particles formed through aggregation of primary particles, at least some of the secondary particles have pores, the particle size distribution diagram of the positive electrode active material that is measured by using the laser diffraction method was of a bimodal shape, and the difference between the peak position of the second peak and the peak position of the first peak was 1 $\mu$m to 13 $\mu$m.

It can be learned from comparison between both of Embodiments 1 to 29 and Embodiments 32 to 37 and Comparative Examples 1 to 4 that, compared with a positive electrode active material with a particle size distribution diagram being of a unimodal shape, the positive electrode active material with the particle size distribution diagram being of the bimodal shape in the present application enabled the positive electrode sheet thereof to have higher shear strength and enabled the battery thereof to have superior volumetric energy density and cycle performance. It can be learned from comparison between both of Embodiments 1 to 29 and Embodiments 32 to 37 and Comparative Example 5 that controlling at least some of the secondary particles to have pores was conducive to prolonging the discharge time of the battery thereof and improving the power performance of the battery. It can be learned from comparison between both of Embodiments 1 to 29 and Embodiments 32 to 37 and Comparative Examples 6 and 7 that controlling the difference between the peak position of the second peak and the peak position of the first peak to be 1 μm to 13 μm was conducive to improving the compacted density of the positive electrode sheet and the cycle performance of the battery.

It can be learned from Embodiments 1 to 4 that each of the secondary particles of the positive electrode active material included a plurality of pores formed by using spaces between the primary particles, and the inner diameter of the pores was controlled to be 0.1 μm to 0.6 μm, so that the positive electrode sheet thereof had excellent shear strength, and the battery thereof had an excellent volumetric energy density, a long discharge time, and excellent cycle performance. The inner diameter of the pores was further controlled to be 0.2 μm to 0.4 μm, so that the battery had better cycle performance.

It can be learned from Embodiments 5 to 9 that each of the secondary particles of the positive electrode active material included a single hollow pore at a central position that is enclosed by the primary particles, and the inner diameter of the pore was controlled to be 0.5 μm to 3 μm, so that the positive electrode sheet thereof had excellent shear strength, and the battery thereof had an excellent volumetric energy density, a long discharge time, and excellent cycle performance. The inner diameter of the pore was further controlled to be 0.8 μm to 1.2 μm, which is further conducive to prolonging the discharge time.

It can be learned from Embodiments 5 and 10 to 13 that Dv50 of the first positive electrode material was controlled to be 8 μm to 18 μm, so that the positive electrode sheet thereof had excellent shear strength, and the battery thereof had an excellent volumetric energy density, a long discharge time, and excellent cycle performance. It can be learned from comparison between Embodiments 5 and 11 to 12 and Embodiments 10 and 13 that Dv50 of the first positive electrode material was further controlled to be 10 μm to 12 μm, to take into account the shear strength of the positive electrode sheet thereof, and the volumetric energy density, the discharge time, and the cycle performance of the battery thereof.

It can be learned from Embodiments 5 and 14 to 15 that the ratio of the difference between Dv90 and Dv50 of the first positive electrode material to Dv50 of the first positive electrode material was controlled to meet 0.6 to 1.2, so that the positive electrode sheet thereof had excellent shear strength, and the battery thereof had an excellent volumetric energy density, a long discharge time, and excellent cycle performance.

It can be learned from Embodiments 5 and 16 to 17 that the ratio of the difference between Dv50 and Dv10 of the first positive electrode material to Dv10 of the first positive electrode material was controlled to meet 1.2 to 2.5, so that the positive electrode sheet thereof had excellent shear strength, and the battery thereof had an excellent volumetric energy density, a long discharge time, and excellent cycle performance.

It can be learned from Embodiments 5 and 18 to 21 that Dv50 of the second positive electrode material was controlled to be 0.8 μm to 5 μm, so that the positive electrode sheet thereof had excellent shear strength, and the battery thereof had an excellent volumetric energy density, a long discharge time, and excellent cycle performance. It can be learned from comparison between Embodiments 5 and 20 and Embodiments 18 to 19 and 21 that Dv50 of the second positive electrode material was further controlled to be 1 μm to 3 μm, to further improve the volumetric energy density and the cycle performance of the battery thereof.

It can be learned from Embodiments 5 and 22 to 23 that the ratio of the difference between Dv90 and Dv50 of the first positive electrode material to Dv50 of the first positive electrode material was controlled to meet 0.8 to 1.5, so that the positive electrode sheet thereof had excellent shear strength, and the battery thereof had an excellent volumetric energy density, a long discharge time, and excellent cycle performance.

It can be learned from Embodiments 5 and 24 to 25 that the ratio of the difference between Dv50 and Dv10 of the first positive electrode material to Dv10 of the first positive electrode material was controlled to meet 6 to 12, so that the positive electrode sheet thereof had excellent shear strength, and the battery thereof had an excellent volumetric energy density, a long discharge time, and excellent cycle performance.

It can be learned from Embodiments 5 and 26 to 29 that the mass ratio A of the first positive electrode material to the second positive electrode material was controlled to be 1.5 to 9, so that the positive electrode sheet thereof had excellent shear strength, and the battery thereof had an excellent volumetric energy density, a long discharge time, and excellent cycle performance. It can be learned from comparison between Embodiments 5 and 27 to 28 and Embodiments 26 and 29 that the mass ratio A of the first positive electrode material to the second positive electrode material was further controlled to be 2 to 8, to take into account the shear strength of the positive electrode sheet thereof, and the volumetric energy density, the discharge time, and the cycle performance of the battery thereof.

It can be learned from Embodiments 5 and 30 to 31 that the thickness of the positive electrode film layer was controlled to be 200 $\mu$m to 400 $\mu$m, so that the positive electrode sheet thereof had excellent shear strength, and the battery thereof had an excellent volumetric energy density, a long discharge time, and excellent cycle performance.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the implementations without departing from the subject matter of the present application, and other implementations constructed by combining some of the constituent elements in the implementations are also included in the scope of the present application.

**Claims**

1. A positive electrode active material, **characterized in that** the positive electrode active material is present in a form of secondary particles formed through aggregation of primary particles, and at least some of the secondary particles have pores; and
a particle size distribution diagram of the positive electrode active material that is measured by using a laser diffraction method is of a bimodal shape, and a difference between a peak position of a second peak and a peak position of a first peak is 1 $\mu$m to 13 $\mu$m.

2. The positive electrode active material according to claim 1, wherein the peak position of the first peak is located within 1 $\mu$m to 5 $\mu$m, optionally, 1.5 $\mu$m to 4.5 $\mu$m; and/or
the peak position of the second peak is located within 6 $\mu$m to 14 $\mu$m, optionally, 8 $\mu$m to 12 $\mu$m.

3. The positive electrode active material according to claim 1 or 2, wherein each of the secondary particles comprises a plurality of pores formed by using spaces between the primary particles, and the inner diameter of the pores is 0.1 $\mu$m to 0.6 $\mu$m, optionally, 0.2 $\mu$m to 0.4 $\mu$m; or
each of the secondary particles comprises a single hollow pore at a central position that is enclosed by the primary particles, and the inner diameter of the pore is 0.5 $\mu$m to 3 $\mu$m, optionally, 0.8 $\mu$m to 1.2 $\mu$m.

4. The positive electrode active material according to any one of claims 1 to 3, wherein the positive electrode active material has a chemical formula as follows:

$$Li_aNi_xM1_yM2_{1-x-y}O_2;$$

and
each of M1 and M2 comprises one or a plurality of Co, Mn, Al, B, Zr, Sr, Y, Sb, W, Ti, Mg, or Nb, and $0.8 \leq a \leq 1.2$, $0.55 \leq x \leq 1.0$, and $0 \leq y \leq 0.45$, optionally, $0.8 \leq a \leq 1.2$, $0.95 \leq x \leq 0.995$, and $0 \leq y \leq 0.05$.

5. The positive electrode active material according to any one of claims 1 to 4, wherein the average particle size D of the primary particles of the positive electrode active material is 0.1 $\mu$m to 0.8 $\mu$m, optionally, 0.2 $\mu$m to 0.5 $\mu$m.

6. The positive electrode active material according to any one of claims 1 to 5, wherein Dv50 of the secondary particles of the positive electrode active material is 9 $\mu$m to 15 $\mu$m, optionally, 10 $\mu$m to 12 $\mu$m.

7. The positive electrode active material according to any one of claims 1 to 6, wherein the specific surface area of the positive electrode active material is 0.1 m$^2$/g to 1.0 m$^2$/g, optionally, 0.2 m$^2$/g to 0.5 m$^2$/g.

8. The positive electrode active material according to any one of claims 1 to 7, wherein the positive electrode active material comprises a first positive electrode material and a second positive electrode material.

9. The positive electrode active material according to claim 8, wherein the first positive electrode material has the pore and the second positive electrode material is of a solid structure; or

the first positive electrode material is of a solid structure and the second positive electrode material has the pore; or
each of the first positive electrode material and the second positive electrode material has the pore.

10. The positive electrode active material according to claim 8 or 9, wherein the mass ratio A of the first positive electrode material to the second positive electrode material and the porosity B of the positive electrode active material meet $0 \le |B - A \times 0.4 - (1-A) \times 0.2| \le 1$.

11. The positive electrode active material according to any one of claims 8 to 10, wherein the mass ratio A of the first positive electrode material to the second positive electrode material is 1.5 to 9, optionally, 2 to 8.

12. The positive electrode active material according to any one of claims 1 to 11, wherein the porosity B of the positive electrode active material is 0.15% to 0.45%, optionally, 0.25% to 0.35%.

13. The positive electrode active material according to any one of claims 8 to 12, wherein each of the first positive electrode material and the second positive electrode material independently has a chemical formula as follows:

$$Li_aNi_xM1_yM2_{1-x-y}O_2;$$

and

each of M1 and M2 comprises one or a plurality of Co, Mn, Al, B, Zr, Sr, Y, Sb, W, Ti, Mg, or Nb, and $0.8 \le a \le 1.2$, $0.55 \le x \le 1.0$, and $0 \le y \le 0.45$, optionally, $0.8 \le a \le 1.2$, $0.95 \le x \le 0.995$, and $0 \le y \le 0.05$.

14. The positive electrode active material according to any one of claims 8 to 13, wherein Dv50 of the first positive electrode material is 8 $\mu$m to 18 $\mu$m, optionally, 10 $\mu$m to 12 $\mu$m.

15. The positive electrode active material according to any one of claims 8 to 14, wherein Dv50 of the second positive electrode material is 0.8 $\mu$m to 5 $\mu$m, optionally, 1 $\mu$m to 3 $\mu$m.

16. The positive electrode active material according to any one of claims 8 to 15, wherein a ratio of a difference between Dv90 and Dv50 of the first positive electrode material to Dv50 of the first positive electrode material meets 0.6 to 1.2, optionally, 0.8 to 1.0; and/or
a ratio of a difference between Dv50 and Dv10 of the first positive electrode material to Dv10 of the first positive electrode material meets 1.2 to 2.5, optionally, 1.5 to 2.0.

17. The positive electrode active material according to any one of claims 8 to 16, wherein a ratio of a difference between Dv90 and Dv50 of the second positive electrode material to Dv50 of the second positive electrode material meets 0.8 to 1.5, optionally, 1.0 to 1.3; and/or
a ratio of a difference between Dv50 and Dv10 of the second positive electrode material to Dv10 of the second positive electrode material meets 6 to 12, optionally, 8 to 10.

18. A positive electrode sheet, **characterized by** comprising a positive electrode current collector and a positive electrode film layer disposed on at least one surface of the positive electrode current collector, the positive electrode film layer comprising the positive electrode active material according to any one of claims 1 to 17.

19. The positive electrode sheet according to claim 18, wherein the thickness of the positive electrode film layer is 200 $\mu$m to 400 $\mu$m, optionally, 220 $\mu$m to 300 $\mu$m.

20. The positive electrode sheet according to claim 18 or 19, wherein the compacted density of the positive electrode film layer is 2.9 g/m$^2$ to 3.5 g/m$^2$.

21. A secondary battery, **characterized by** comprising the positive electrode sheet according to any one of claims 18 to 20.

22. An electric device, **characterized by** comprising the secondary battery according to claim 21.

FIG. 1

FIG. 2

FIG. 3

FIG. 4

FIG. 5

FIG. 6

FIG. 7

## INTERNATIONAL SEARCH REPORT

| International application No. |
|---|
| **PCT/CN2024/084405** |

**A. CLASSIFICATION OF SUBJECT MATTER**

C01G 53/00(2006.01)i; C01G 51/00(2006.01)i; H01M 4/505(2010.01)i; H01M 4/525(2010.01)i; H01M 4/485(2010.01)i; H01M 10/0525(2010.01)i

According to International Patent Classification (IPC) or to both national classification and IPC

**B. FIELDS SEARCHED**

Minimum documentation searched (classification system followed by classification symbols)

IPC:C01G 53/-, C01G 51/-, H01M 4/-, H01M 10/-

Documentation searched other than minimum documentation to the extent that such documents are included in the fields searched

Electronic data base consulted during the international search (name of data base and, where practicable, search terms used)

CNTXT, ENTXT, VEN, CNKI, WEB OF SCIENCE: 正极, 电池, 洞, 孔, 一次颗粒, 二次颗粒, 粒径, 分布, 峰, 锂, 锰, 镍, 钴, 铝, 硼, 锆, 锶, 钇, 锑, 钨, 钛, 镁, 铌, Li, Mn, Ni, Co, Al, B, Zr, Sr, Y, Sb, W, Ti, Mg, Nb, 内径, 直径, positive electrode, battery, hole+, primary particle, secondary particle, size, distribution, lithium, manganese, nickel, cobalt, aluminum, boron, zirconium, strontium, yttrium, antimony, tungsten, titanium, magnesium, niobium, diameter

**C. DOCUMENTS CONSIDERED TO BE RELEVANT**

| Category* | Citation of document, with indication, where appropriate, of the relevant passages | Relevant to claim No. |
|---|---|---|
| X | CN 115050924 A (SK ENERGY CO., LTD.) 13 September 2022 (2022-09-13) description, paragraphs [0014], [0055], [0067], [0073], and [0117], embodiment 1, and figure 1 | 1-22 |
| A | CN 113224271 A (NINGDE AMPEREX TECHNOLOGY LTD.) 06 August 2021 (2021-08-06) entire document | 1-22 |
| A | CN 113745452 A (POWERAMP TECHNOLOGY LIMITED) 03 December 2021 (2021-12-03) entire document | 1-22 |
| A | CN 111492511 A (LG CHEMICAL LTD.) 04 August 2020 (2020-08-04) entire document | 1-22 |
| A | US 2022052321 A1 (CONTEMPORARY AMPEREX TECHNOLOGY CO., LTD.) 17 February 2022 (2022-02-17) entire document | 1-22 |

☐ Further documents are listed in the continuation of Box C. ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 June 2024** | **02 July 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/084405**

| Patent document cited in search report | | | Publication date (day/month/year) | Patent family member(s) | | | Publication date (day/month/year) |
|---|---|---|---|---|---|---|---|
| CN | 115050924 | A | 13 September 2022 | EP | 4057380 | A2 | 14 September 2022 |
| | | | | EP | 4057380 | A3 | 19 October 2022 |
| | | | | KR | 20220126004 | A | 15 September 2022 |
| | | | | JP | 2022137007 | A | 21 September 2022 |
| | | | | US | 2022285690 | A1 | 08 September 2022 |
| CN | 113224271 | A | 06 August 2021 | None | | | |
| CN | 113745452 | A | 03 December 2021 | None | | | |
| CN | 111492511 | A | 04 August 2020 | EP | 4372843 | A2 | 22 May 2024 |
| | | | | US | 2023327107 | A1 | 12 October 2023 |
| | | | | EP | 3712989 | A1 | 23 September 2020 |
| | | | | EP | 3712989 | A4 | 09 December 2020 |
| | | | | EP | 3712989 | B1 | 22 May 2024 |
| | | | | WO | 2019147017 | A1 | 01 August 2019 |
| | | | | KR | 20190090350 | A | 01 August 2019 |
| | | | | US | 2021151754 | A1 | 20 May 2021 |
| | | | | US | 11870070 | B2 | 09 January 2024 |
| | | | | JP | 2021506091 | A | 18 February 2021 |
| | | | | JP | 7048860 | B2 | 06 April 2022 |
| | | | | DE | 202019005967 | U1 | 15 September 2023 |
| | | | | KR | 20210111728 | A | 13 September 2021 |
| | | | | KR | 102417199 | B1 | 06 July 2022 |
| US | 2022052321 | A1 | 17 February 2022 | WO | 2021217628 | A1 | 04 November 2021 |
| | | | | KR | 20210134924 | A | 11 November 2021 |
| | | | | EP | 3926707 | A1 | 22 December 2021 |
| | | | | EP | 3926707 | A4 | 20 April 2022 |
| | | | | US | 11322739 | B2 | 03 May 2022 |
| | | | | JP | 2022527148 | A | 31 May 2022 |
| | | | | JP | 7234403 | B2 | 07 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310473126X
- GB 190772016 T
- GB 195872017 T
- GB 24586 T
- GB 245332009 T